# EUROPÄISCHE PATENTSCHRIFT

(11) **EP 0 902 342 B1**
(45) Veröffentlichungstag und Bekanntmachung des Hinweises auf die Patenterteilung: **27.11.2002**
(21) Anmeldenummer: 97115578.3
(22) Anmeldetag: 09.09.1997
(51) Int. Cl.: G05B 19/18

(54) **Numerische Steuerung zur Fertigung von unrunden Werkstücken**
Numerical control for manufacturing non-circular workpieces
Commande numérique pour fabrication des pièces non circulaires

(43) Veröffentlichungstag der Anmeldung: 17.03.1999
(73) Patentinhaber: Dr. Johannes Heidenhain GmbH, 83301 Traunreut (DE)
(72) Erfinder: Gomolinski, Andrzej, Dipl.-Ing., 9015 St. Gallen (CH)

(56) Entgegenhaltungen:
- EP-A- 0 479 026
- EP-A- 0 643 343
- EP-B- 0 103 714
- EP-B- 0 304 876
- DE-A- 3 722 084
- DE-A- 4 032 770
- POTTHAST A ET AL: "CNC-GESTEUERTES SCHLEIFEN VON FREIFORMKURVEN" 1.März 1991 , ZWF ZEITSCHRIFT FUR WIRTSCHAFTLICHE FERTIGUNG UND AUTOMATISIERUNG, VOL. 86, NR. 3, PAGE(S) 112 - 116 XP000202695 * Seite 113 - Seite 115; Abbildungen 2,4 *

## Beschreibung

Die Erfindung betrifft eine numerische Steuereinrichtung zur Fertigung von unrunden Werkstücken, mit einer Eingabeeinheit zur Eingabe der gewünschten Sollkontur des Werkstückes sowie weiterer geometrischer und technologischer Informationen, einer Recheneinheit zur Verarbeitung der Eingabedaten und zur Ausgabe von Steuerbefehlen für Antriebe mehrerer Achsen einer Werkzeugmaschine. Eine dieser Achsen ist eine Drehachse, um dessen Längsachse das Werkstück eine Drehbewegung ausführt und eine weitere Achse verläuft quer zur Längsachse.

Derartige numerische Steuereinrichtungen werden insbesondere zum Schleifen von unrunden Formkörpern eingesetzt. Dabei muß der Schleifschlitten bei der Bearbeitung eine kombinierte Bewegung entsprechend der gewünschten Formkontur (Sollkontur) und der gewünschten Spanabnahme ausführen.

In der DE-A-40 32 770 ist eine numerische Steuereinrichtung und ein Verfahren zum Schleifen von unrunden Formkörpern beschrieben. Die Formdaten und die geometrischen Zustelldaten werden getrennt voneinander eingegeben, zur Verarbeitung dieser Daten bei der Bearbeitung des Formkörpers sind gemeinsame Interpolationseinheiten vorgesehen.

Aufgabe der Erfindung ist es, eine numerische Steuereinrichtung anzugeben, welche auf einfache Weise die Fertigung von unrunden Werkstücken ermöglicht und bei der die Bearbeitungsparameter auf einfache Weise gezielt beeinflußt werden können.

Diese Aufgabe wird durch die Merkmale des Anspruches 1 gelöst.

Die Erfindung betrifft weiterhin ein Verfahren zum Betrieb einer numerischen Steuereinrichtung zur Fertigung von unrunden Werkstücken. Bei diesem Verfahren wird eine Werkzeugmaschine derart angesteuert, daß das Werkstück eine Drehbewegung um eine Längsachse und das Werkzeug zur Erzeugung der Formkontur eine quer zur Längsachse gerichtete Zustellbewegung in Abhängigkeit der Drehbewegung ausführt.

Dieses Verfahren wird insbesondere zum Schleifen von unrunden Formkörpern eingesetzt, das Fertigungsverfahren wird dann als Formschleifen oder Unrundschleifen bezeichnet. Dabei muß der Schleifschlitten eine kombinierte Bewegung entsprechend der gewünschten Formkontur und der gewünschten Spanabnahme ausführen.

Eine weitere Aufgabe der Erfindung ist es deshalb, ein Verfahren zum Betrieb einer numerischen Steuereinrichtung zur Fertigung von unrunden Werkstücken anzugeben, bei dem eine einfache Verarbeitung der Eingabedaten und Erzeugung der Steuerdaten ermöglicht wird, und bei dem die Steuerdaten auf einfache Weise beeinflußt werden können.

Diese Aufgabe wird durch die Merkmale des Anspruches 5 gelöst.

Vorteilhafte Ausbildungen der Erfindung sind in den abhängigen Ansprüchen angegeben.

Die Erfindung wird anhand von Ausführungsbeispielen näher erläutert.
Es zeigt
- Figur 1: eine schematische Darstellung einer Schleifmaschine mit einer numerischen Steuereinrichtung,
- Figur 2: ein Werkstück und
- Figur 3: den Aufbau der numerischen Steuereinrichtung im Detail.

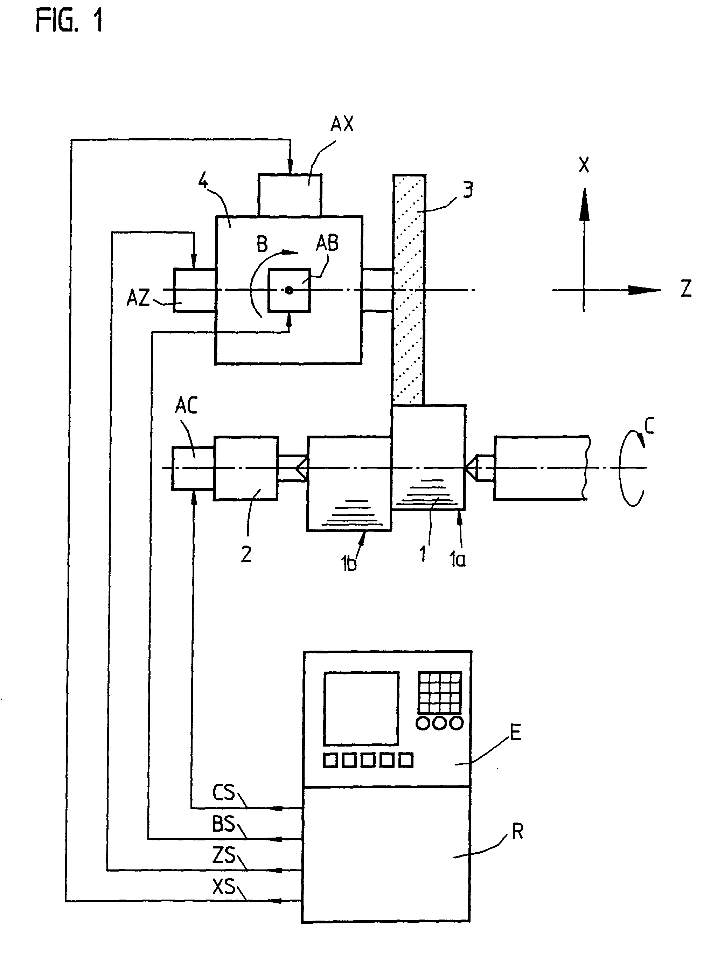

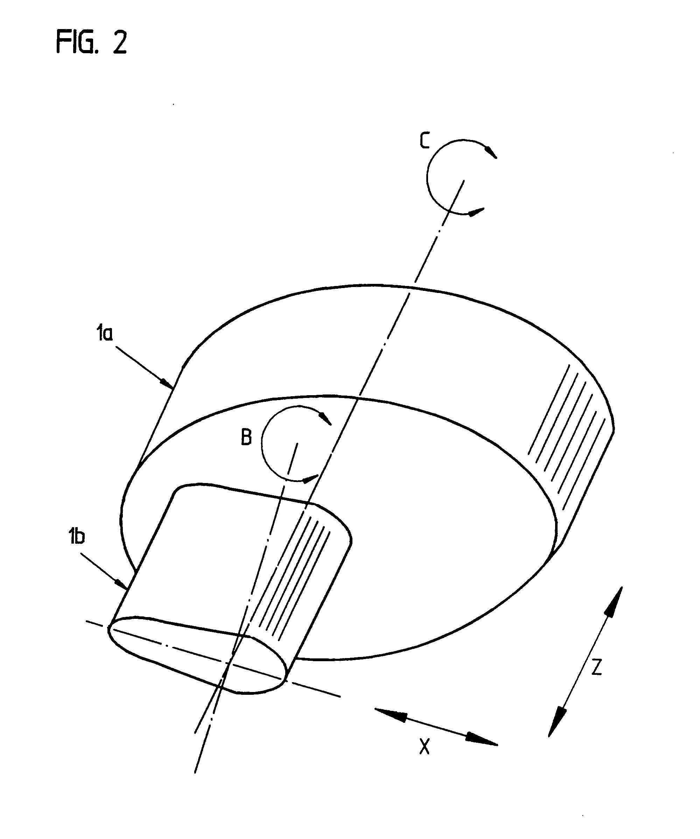

In Figur 1 ist schematisch das Konzept einer numerisch gesteuerten Schleifmaschine zur Fertigung des in Figur 2 dargestellten Werkstückes 1 gezeigt. Das Werkstück 1 wird von einer Spindel 2 NC-gesteuert um eine Rundachse C angetrieben. Der Antrieb hierzu ist mit dem Bezugszeichen AC versehen. Die numerische Steuereinrichtung zur numerisch gesteuerten Fertigung wird nachfolgend auch abgekürzt als numerische Steuerung bezeichnet.

Die Bearbeitung des Werkstückes 1 erfolgt durch eine sich drehende Schleifscheibe 3. Die Schleifscheibe 3 ist mittels eines Antriebes AZ entlang der Z-Achse, mittels eines Antriebes AX entlang der X-Achse und mittels eines weiteren Antriebes AB um die B-Achse numerisch gesteuert bewegbar. Die Achsen X und Z stehen senkrecht aufeinander, die C-Achse ist eine Drehachse um die Z-Achse und die B-Achse ist eine Drehachse um eine Achse senkrecht zur X- und Z-Achse.

Mit der Schleifscheibe 3 wird die unrunde Außenkontur 1a des sich um die Drehachse C drehenden Werkstückes 1 geschliffen, indem der Schleifschlitten 4 mit der Schleifscheibe 3 eine Zustellbewegung in X-Richtung in Abhängigkeit des Drehwinkels C ausführt. Diese Zustellbewegung ist eine Überlagerung von mehreren Teilbewegungen, die sich aus der gewünschten Sollkontur (Form der Außenkontur 1a) des Werkstückes 1 und des gewünschten Abtrages in Abhängigkeit des Rohlings bzw. des Aufmaßes ergibt.

Bei der Fertigung des Werkstückes 1 sind verschiedene Teilprozesse erforderlich, die wichtigsten sind:
1. Vorpositionieren der Schleifscheibe 3 relativ zum Werkstück 1 in den Achsen X, Z und B vor dem eigentlichen Schleifvorgang.
2. Vorpositionieren des Werkstückes 1 um die Drehachse C vor dem eigentlichen Schleifvorgang.
3. Positionieren und Bewegen der Schleifscheibe 3 beim Abrichten oder beim Werkzeugwechsel.
4. Bewegen der Schleifscheibe 3 während des Schleifvorganges entlang der Außenkontur des Werkstückes 1 in Z-Richtung. Diese Bewegung ist bei Werkstücken 1, welche in Z-Richtung nicht konisch sind eine Bewegung mit X=konstant, insbesondere =0 entlang der Z-Achse. Bei konischen Werkstücken ist diese Bewegung eine Überlagerung einer X- und Z-Bewegung mit X=f(Z). Diese Bewegungen werden beim Pendelschleifen und oszillierenden Schleifen benötigt.
5. Bewegen der Schleifscheibe 3 während des Schleifvorganges in X-Richtung als Zustellbewegung zur Spanabnahme unabhängig vom Drehwinkel der Drehachse C. Bei konischen Werkstücken ist diese Zustellbewegung eine Überlagerung einer Bewegung in X- und Z-Richtung.
6. Bewegen der Schleifscheibe 3 in X-Richtung in Abhängigkeit vom Drehwinkel der Drehachse C entsprechend der gewünschten unrunden Außenkontur 1a des Werkstückes 1.
7. Drehen der Schleifscheibe 3 um die B-Achse zur Nachführung der Schleifscheibe 3 in Abhängigkeit von der Drehachse C bei unrunden konischen Werkstücken entsprechend der Sollkontur.
8. Drehung der Schleifscheibe 3 um die B-Achse in Abhängigkeit von der Position in Z-Richtung entsprechend der Sollkontur.

Durch die Erfindung werden diese einzelnen Teilprozesse zu Gruppen zusammengefaßt, wobei jeweils nur Bewegungen der Teilprozesse innerhalb einer Gruppe während der Abarbeitung voneinander abhängig sind. Durch nachfolgende Überlagerung von mehreren einfachen und unabhängigen Teilprozessen und daraus resultierenden unabhängigen Interpolations-Bewegungen wird für jede Achse X, Z, C, B die resultierende Sollbahn (Steuerdaten) XD, ZD, CD, BD erzeugt.

Durch diese Maßnahme ist eine übersichtliche Verarbeitung der Eingabedaten sowie eine gezielte Beeinflussung bestimmter Teilprozesse auf einfache Weise möglich.

In bekannter Weise werden die geometrischen und technologischen Informationen an einer Eingabeeinheit E der numerischen Steuerung eingegeben. Diese Informationen definieren die Bedingungen für die einzelnen Teilprozesse, wie Verfahrweg und Verfahrgeschwindigkeit und bilden das NC-Programm N, auf dessen Grundlage in einer Recheneinheit R der Steuerung die Stellgrößen XS, ZS, CS und BS für jeden Antrieb AX, AZ, AC, AB erzeugt werden. Die Eingabe kann manuell, mittels eines Datenträgers oder von einer externen Computer- oder Programmiereinheit erfolgen.

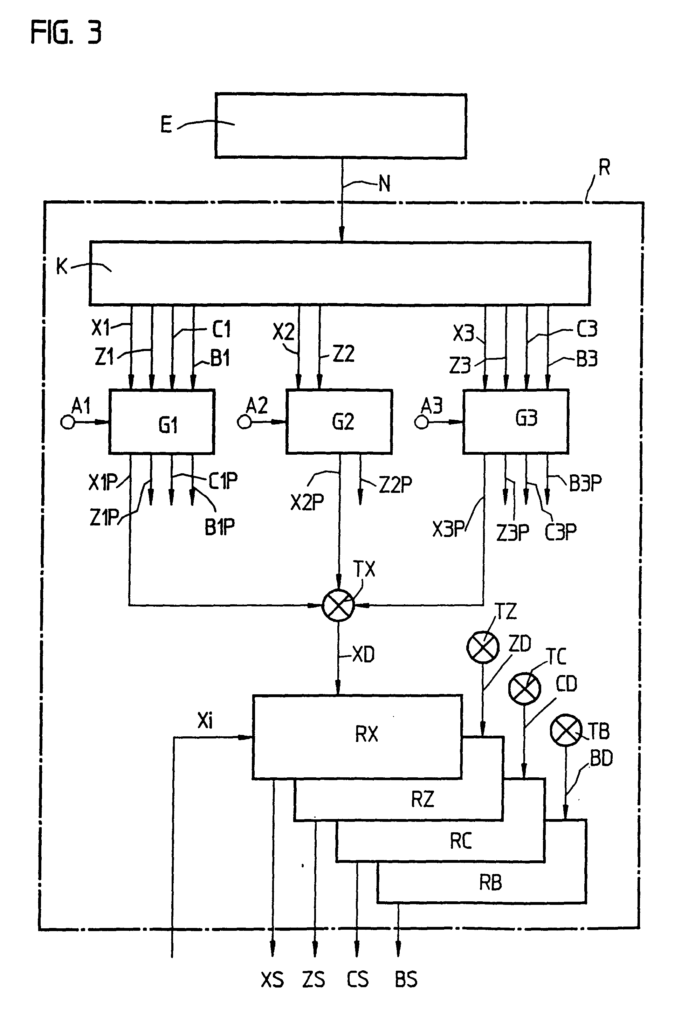

In Figur 3 ist das Prinzip der Recheneinheit R schematisch dargestellt. Sie besteht aus einer Koordinationseinheit K, in der die Daten des NC-Programmes N einzelnen Generatoren G1, G2, G3 zur Generierung der Steuerdaten X1P, Z1P, C1P, B1P; X2P, Z2P; X3P, Z3P, C3P, B3P für die Achsbewegungen zugeordnet werden. Die Aufteilung der Daten erfolgt derart, daß Daten der Teilprozesse, deren Bewegungen voneinander abhängig sind einem einzigen Generator G1, G2 oder G3 zugeführt werden. Die Teilprozesse, die einem Generator G1, G2, G3 zugeordnet werden, sind aber unabhängig von den Teilprozessen, die einem der anderen Generatoren G1, G2, G3 zugeordnet werden.

Im dargestellten Beispiel ist der Generator G1 zuständig für die oben genannten Teilprozesse Nummer 1 bis 4. Das bedeutet, daß dem Generator G1 die erforderlichen geometrischen und dynamischen Daten (Beschleunigung, Geschwindigkeit) dieser Teilprozesse Nummer 1 bis 4 aus dem NC-Programm zugeführt werden. Diese Daten, welche sich auf die X-Achse beziehen, sind in Figur 3 mit X1 bezeichnet, welche sich auf die Z-Achse beziehen mit Z1, welche sich auf die C-Achse beziehen mit C1 und welche sich auf die B-Achse beziehen mit B1 bezeichnet. Aus diesen Daten werden in einem Interpolator des Generators G1 die für diese Teilprozesse erforderlichen Steuerdaten X1P, Z1P, C1P und B1P für die Regler RX, RZ, RC und RB erzeugt.

Der Generator G2 ist zuständig für den oben genannten Teilprozess Nummer 5, also für die Zustellbewegung zur Spanabnahme quer, insbesondere senkrecht zur Sollkontur des Werkstückes 1. Dem Generator G2 werden die erforderlichen geometrischen und dynamischen Daten des Zustellprozesses aus dem NC-Programm N zugeführt. Diese Daten dieses Zustellprozesses, die sich auf die X-Achse beziehen, sind mit X2 und die Daten, welche sich auf die Z-Achse beziehen, sind mit Z2 bezeichnet. Aus diesen Daten werden in einem Interpolator des Generators G1 die für diesen Teilprozess erforderlichen Steuerdaten X2P und Z2P für die Regler RX und RZ erzeugt.

Die in den Generatoren G1 und G2 enthaltenen Teilprozesse würden zum Schleifen von runden Konturen ausreichen. Gemäß der Erfindung ist ein weiterer Generator G3 vorgesehen, der zur Erzeugung der unrunden Kontur, also für den Teilprozess Nummer 6 zuständig ist. Soll eine unrunde Kontur bearbeitet werden, die in Z-Richtung nicht konisch ist, werden dem Generator G3 die Daten der gewünschten unrunden Außenkontur des Werkstückes 1, also die Sollkontur 1a sowie die erforderlichen dynamischen Daten zugeführt. Der Generator G3 erzeugt aus diesen Daten X3 und C3 des NC-Programmes N Steuerdaten X3P und C3P zur Steuerung der Antriebe AX und AC. Hierzu enthält der Generator G3 einen Interpolator, der unabhängig von den Generatoren G1 und G2 arbeitet und die Daten X3, C3 für die Bahnsteuerung entlang der Sollkontur (Außenkontur 1a) miteinander verknüpft.

Die Eingabe der Sollkontur erfolgt in an sich bekannter Weise an der Eingabeeinheit E der numerischen Steuerung. Besonders vorteilhaft ist es, wenn die Eingabe interaktiv über einen Bildschirm sowie einer Tastatur der Steuerung erfolgt. Dabei werden die Sollkonturen des Werkstückes 1 in Polarkoordinaten oder in kartesischen Koordinaten im Dialog zwischen Eingabeeinheit E und Bediener beschrieben. Die Beschreibung erfolgt entweder durch Parametereingabe für mathematisch bestimmbare Konturen oder durch die Eingabe von Wertetabellen für mathematisch nicht exakt definierte Formen. Sind die geometrischen Formen eingegeben, so werden die NC-Sätze erzeugt.

Die Zuordnung der Daten des NC-Programmes zu den einzelnen Generatoren G1, G2, G3 kann durch eine Codierung der NC-Sätze erfolgen, so daß die Koordinationseinheit K die Aufteilung der Daten in Abhängigkeit des Codes ausführt.

Wesentlich bei der Erfindung ist, daß die Generatoren G1, G2, G3 parallel zueinander angeordnet sind und parallel unabhängig voneinander arbeiten. Während der Generierung von Steuerdaten X1 P, Z1 P, C1 P, B1P sowie X2P, Z2P und X3P, Z3P, C3P ist keine Synchronisation zwischen den Generatoren G1, G2, G3 erforderlich. Dies hat den Vorteil, daß Parameter der Prozesse eines Generators G1 oder G2 unabhängig von dem Prozeß eines anderen Generators G3 beeinflußt und geändert werden können. So kann beispielsweise beim Pendelschleifen die Vorschubgeschwindigkeit der Pendelbewegung (Teilprozeß Nummer 4) über ein Mittel A1 unabhängig von der Zustellung (Teilprozeß Nummer 5) eingestellt werden. Beim Teilprozeß Nummer 5 kann weiterhin über den Generator G2 die Zustellschrittlänge, die Art der Zustellung (also kontinuierlich oder schrittweise) sowie die Richtung der Zustellung unabhängig von den Teilprozessen der Generatoren G1 und G3 eingestellt werden.

Besonders vorteilhaft ist es, daß die an sich bekannte Override-Funktion gezielt eingesetzt werden kann, indem jedem der Generatoren G1, G2, G3 ein Override A1, A2, A3 zugeordnet ist.

Mit dem Override A2 kann beispielsweise die durch das NC-Programm N vorgegebene Geschwindigkeit der Zustellbewegung geändert und optimiert werden. Die Änderung bezieht sich auf die resultierende Bahngeschwindigkeit, die aus den X- und Z-Eingabedaten durch Interpolation generiert wird. Durch diese Maßnahme kann auf einfache Weise die Art der Bearbeitung wie Schruppen oder Schlichten beliebig vom Bediener eingestellt und angepaßt werden. Ebenso kann die Zustellschrittlänge beeinflußt werden.

Mit dem Override A3 kann die durch das NC-Programm N vorgegebene Drehgeschwindigkeit (Bahn-bzw. Umfangsgeschwindigkeit) und somit die Schnittgeschwindigkeit geändert und optimiert werden. Die Änderung bezieht sich auf die resultierende Bahn, die aus den Eingabedaten X3, C3 durch Interpolation generiert wird.

Weiterhin ist es möglich, die Teilprozesse eines Generators G3 NC-gesteuert und eines weiteren Generators G2 unabhängig davon Handrad-gesteuert auszuführen.

Ein weiterer Vorteil der parallelen Anordnung der Generatoren G1, G2, G3 ist, daß der Interpolationstakt der einzelnen Generatoren G1, G2, G3 unabhängig voneinander eingestellt werden kann. Das Zeitraster, in dem die Stützpunkte der Bahn X3P, C3P mittels des Generators G3 berechnet werden, kann beispielsweise kleiner sein, als das Zeitraster des Generators G1.

Das Vorsehen des Generators G3 hat den besonderen Vorteil, daß die Steuerdaten X3P und C3P aufgrund der vorgegebenen geometrischen Sollkontur des Werkstückes 1 und vorgegebenen dynamischen Daten (Bahngeschwindigkeit) unabhängig von den Teilprozessen der Generatoren G1, G2 erzeugt werden können. Die Programmierung und die Erzeugung der Steuerdaten X3P, C3P für die unrunde Sollkontur 1a erfolgt unabhängig von der Lage des Werkstückes 1 und der Schleifscheibe 3. Besitzt ein Werkstück 1 mehrere nacheinander zu bearbeitende verschiedene Sollkonturen 1a und 1b, können diese unabhängig voneinander programmiert und abgearbeitet werden. Die Abhängigkeit der gegenseitigen Lage der Sollkonturen 1a und 1b wird durch die Vorpositionierung, also durch den Generator G1 bestimmt, wobei während der eigentlichen Bearbeitung die Steuerdaten X3P und C3P des Generators G3 unabhängig vom Generator G1, d. h. auch unabhängig von Eingangs- und Ausgangsdaten des Generators G1 erzeugt werden. Durch einen Teilprozeß des Generators G1 wird die Beschreibung der Kontur 1a und 1b (Teilprozeß Nummer 6 im Generator G3) mit der physikalischen Lage des Werkstückes 1 und der Schleifscheibe 3 in Bezug gebracht. Die Steuerdaten X3P, C3P der Teilprozesse für die Konturen 1a und 1b werden unabhängig voneinander und unabhängig von Teilprozessen der weiteren Generatoren G1, G2 im Generator G3, also ausschließlich von den, die Konturen 1a, 1b bestimmenden Daten generiert.

Die Generierung der Steuerdaten X2P, Z2P für die Zustellbewegung erfolgt unabhängig von den Generatoren G1 und G3 sowie unabhängig von Eingangsdaten X1, Z1, C1, B1; X3, Z3, C3, B3 sowie Ausgangsdaten X1 P, Z1 P, B1P, B1P; X3P, Z3P, C3P, B3P der Generatoren G1 und G3. Die Steuerdaten X2P, Z2P werden insbesondere unabhängig von den, die Sollkontur bestimmenden Daten X3, Z3, C3, B3; X3P, Z3P, C3P, B3P (dies sind die Geometrie und die Dynamik bestimmende Daten ) generiert.

Die für die einzelnen Achsen X, Z, C und B in den Generatoren G1, G2, G3 unabhängig voneinander erzeugten Steuerdaten X1P, Z1P, C1P, B1P; X2P, Z2P; X3P, C3P werden zur Erzeugung der resultierenden Steuerdaten XD, ZD, CD, BD in Addierbausteinen TX, TZ, TC, TD einander überlagert. Diese Steuerdaten XD, ZD, CD, BD werden in an sich bekannter Weise Reglern RX, RZ, RC, RB zur Erzeugung der Stellgrößen XS, ZS, CS, BS für die Antriebe AX, AZ, AC, AB zugeführt.

In bekannter und daher nicht im Detail dargestellter Weise werden die Ist-Positionen des Werkstückes 1 bezogen auf die C-Achse sowie die Ist-Positionen der Schleifscheibe 3 um die B-Achse sowie entlang der X- und Z-Achsen von Positionsmeßsystemen erfaßt und der Recheneinheit R zugeführt. Diese Zuführung ist in Figur 3 schematisch für die X-Achse dargestellt, die Ist-Position der Schleifscheibe 3 in X-Richtung ist dabei mit Xi bezeichnet.

Bei der vorhergehenden Beschreibung wird von der Fertigung eines relativ einfachen unrunden Werkstückes 1 ausgegangen, bei dem die Formkontur ausschließlich durch X- und Z-Daten beschreibbar ist. Bei konischen unrunden Werkstücken ist es erforderlich, zusätzlich bei der Form die B-Achse zu berücksichtigen, so daß im Generator G3 auch der Teilprozeß Nummer 7 zur Erzeugung der Steuerdaten B3P abläuft. Bei bestimmten Werkstücken kann es erforderlich sein, im Generator G3 auch die Z-Achse zu berücksichtigen, so daß im Generator G3 auch der Teilprozeß Nummer 8 zur Erzeugung der Steuerdaten Z3P abläuft.

Im beschriebenen Beispiel ist der Generator G1 für die Teilprozesse Nummer 1 bis 4 zuständig. Es ist auch möglich, die Teilprozesse Nummer 1 bis 3 in einem Generator und den Teilprozeß Nummer 4 in einem separaten Generator zu generieren, so daß insgesamt vier Generatoren parallel arbeiten.

Die unrunden Konturen können beliebig sein, es können auch scharfkantige Konturen, wie mehrkantige Konturen mit ebenen Flächen und scharfen Kanten sein, die aus einem zylindrischen Rohteil geschliffen werden.

Die Erfindung ist nicht auf das beschriebene Schleifen von Außenkonturen beschränkt, es kann auch beim Schleifen von Innenkonturen sowie bei anderen Bearbeitungsverfahren wie z.B. beim Fräsen eingesetzt werden. Dabei wird die rotierende Schleifscheibe 3 durch ein anderes Werkzeug, insbesondere einen rotierenden Fräser ersetzt.

## Patentansprüche

1. Numerische Steuereinrichtung zur Fertigung von unrunden Werkstücken (1) mit
a) einer Eingabeeinheit (E) zur Eingabe von ersten Daten (X1, Z1, C1, B1) zur Definition von Positionierbewegungen in mehreren Achsen (X, Z, C, B) zwischen Werkstück (1) und Werkzeug (3) die vor dem eigentlichen Bearbeitungsprozeß ablaufen sollen sowie von zweiten Daten (X2, Z2) zur Definition der Zustellbewegung des Werkzeuges (3) zur Spanabnahme und von dritten Daten (X3, Z3, C3, B3) zur Definition der unrunden Sollkontur (1a) des Werkstückes (1) in mehreren Achsen (X, Z, C, B);
b) einer Koordinationseinheit (K) zum Zuführen der ersten Daten (X1, Z1, C1, B1) an einen ersten Generator (G1), Zuführen der zweiten Daten (X2, Z2) an einen zweiten Generator (G2) und Zuführen der dritten Daten (X3, Z3, C3, B3) an einen dritten Generator (G3), wobei jeder der Generatoren (G1, G2, G3) eine Interpolationseinheit aufweist;
c) einen Addierbaustein (TX, TZ, TC, TB) für jede Achse (X, Z, C, B) zur Bildung von resultierenden Steuerdaten (XD, ZD, CD, BD) für einen Antrieb (AX, AZ, AC, AB) jeweils einer Achse (X, Z, C, B) durch Kombination der am Ausgang der Generatoren (G1, G2, G3) anstehenden Steuerdaten (X1P, Z1P, C1P, B1P; X2P, Z2P; X3P, Z3P, C3P, B3P) dieser Achsen (X, Z, C, B).

2. Numerische Steuereinrichtung nach Anspruch 1, **dadurch gekennzeichnet, daß** zumindest einem der Generatoren (G1, G2, G3) ein Mittel (A1, A2, A3) zugeordnet ist, um die Steuerdaten (X1P, Z1P, C1P, B1P; X2P, Z2P; X3P, Z3P, C3P, B3P) am Ausgang eines Generators (G1, G2, G3) ohne Beeinflussung der Steuerdaten (X1P, Z1P, C1P, B1P; X2P, Z2P; X3P, Z3P, C3P, B3P) eines anderen Generators (G1, G2, G3) beeinflussen zu können.

3. Numerische Steuereinrichtung nach Anspruch 2, **dadurch gekennzeichnet, daß** dem zweiten Generator (G2) ein Mittel A2) zugeordnet ist, mit dem die Geschwindigkeit der Zustellbewegung (X2P, Z2P) oder die Schrittlänge der Zustellung beeinflußt wird.

4. Numerische Steuereinrichtung nach Anspruch 2, **dadurch gekennzeichnet, daß** dem dritten Generator (G3) ein Mittel (A3) zugeordnet ist, mit dem die Bahngeschwindigkeit entlang der Sollkontur (1a) beeinflußt wird.

5. Verfahren zum Betrieb einer numerischen Steuereinrichtung zur Fertigung von unrunden Werkstücken (1) mit den Verfahrensschritten:
a) Eingabe von ersten Daten (X1, Z1, C1, B1) zur Definition von Positionierbewegungen zwischen Werkstück (1) und Werkzeug (3) in mehreren Achsen (X, Z, C, B) vor dem eigentlichen Bearbeitungsprozeß sowie von zweiten Daten (X2, Z2) zur Definition der Zustellbewegung des Werkzeuges (3) zur Spanabnahme und von dritten Daten (X3, Z3, C3, B3) zur Definition der unrunden Sollkontur (1a) des Werkstückes (1);
b) Zuführen der ersten Daten (X1, Z1, C1, B1) an einen ersten Generator (G1), Zuführen der zweiten Daten (X2, Z2) an einen zweiten Generator (G2) und Zuführen der dritten Daten (X3, Z3, C3, B3) an einen dritten Generator (G3);
c) unabhängige Berechnung von Steuerdaten (X1P, Z1P, C1P, B1P; X2P, Z2P; X3P, Z3P, C3P, B3P) in den Generatoren (G1, G2, G3), indem in jedem der Generatoren (G1, G2, G3) ein Interpolationsverfahren unabhängig von den Interpolationsverfahren der anderen Generatoren (G1, G2, G3) abläuft und Ausgabe dieser Steuerdaten (X1P, Z1P, C1P, B1P; X2P, Z2P; X3P, Z3P, C3P, B3P) für mehrere Achsen (X, Z, C, B);
d) Bildung von resultierenden Steuerdaten (XD, ZD, CD, BD) für jeweils eine Achse (X, Z, C, B) durch Kombination der am Ausgang der Generatoren (G1, G2, G3) anstehenden Steuerdaten (X1P, Z1P, C1P, B1P; X2P, Z2P; X3P, Z3P, C3P, B3P) dieser Achsen (X, Z, C, B).

6. Verfahren nach Anspruch 5, **dadurch gekennzeichnet, daß** der Interpolationstakt einzelner Generatoren (G1, G2, G3) unabhängig voneinander eingestellt wird.

## Claims

1. Numerical control device for producing non-circular workpieces (1), having
a) an input unit (E) for inputting first data (X1, Z1, C1, B1) to define positioning movements in a plurality of axes (X,Z,C,B) between workpiece (1) and tool (3) which are supposed to take place before the actual machining process, and for inputting second data (X2, Z2) to define the infeed motion of the tool (3) for metal cutting, and third data (X3, Z3, C3, B3) to define the desired non-circular contour (1a) of the workpiece (1) in a plurality of axes (X, Z, C, B);
b) a co-ordination unit (K) for supplying the first data (X1, Z1, C1, B1) to a first generator (G1), supplying the second data (X2, Z2) to a second generator (G2) and supplying the third data (X3, Z3, C3, B3) to a third generator (G3), each of the generators (G1, G2, G3) having an interpolation unit;
c) an adding component (TX, TZ, TC, TB) for each axis (X, Z, C, B) to form resulting control data (XD, ZD, CD, BD) for a drive (AX, AX, AC, AB) for each axis (X, Z, C, B) through combining the control data (X1P, Z1P, C1P, B1P; X2P, Z2P; X3P, Z3P, C3P, B3P) of these axes (X, Z, C, B) present at the exit of the generators (G1, G2, G3).

2. Numerical control device according to claim 1, **characterised in that** there is associated with at least one of the generators (G1, G2, G3) a means (A1, A2, A3), in order to be able to influence the control data (X1P, Z1P, C1P, B1P; X2P, Z2P; X3P, Z3P, C3P, B3P) at the exit of one generator (G1, G2, G3) without influencing the control data (X1P, ZIP, C1P, B1P; X2P, Z2P; X3P, Z3P, C3P, B3P) of another generator (G1, G2, G3).

3. Numerical control device according to claim 2, **characterised in that** there is associated with the second generator (G2) a means (A2) with which the speed of the infeed motion (X2P, Z2P) or the length of the infeed step is influenced.

4. Numerical control device according to claim 2, **characterised in that** there is associated with the third generator (G3) a means (A3) with which the path speed along the desired contour (1a) is influenced.

5. Method of operating a numerical control device for producing non-circular workpieces (1), having the method steps:
a) inputting first data (X1, Z1, C1, B1) to define positioning movements between workpiece (1) and tool (3) in a plurality of axes (X, Z, C, B) before the actual machining process, as well as inputting second data (X2, Z2) to define the infeed motion of the tool (3) for metal cutting, and third data (X3, Z3, C3, B3) to define the desired non-circular contour (1a) of the workpiece (1);
b) supplying the first data (X1, Z1, C1, B1) to a first generator (G1), supplying the second data (X2, Z2) to a second generator (G2) and supplying the third data (X3, Z3, C3, B3) to a third generator (G3);
c) independent calculation of control data (X1P, Z1P, C1P, B1P; X2P, Z2P; X3P, Z3P, C3P, B3P) in the generators (G1, G2, G3) by an interpolation process taking place in each of the generators (G1, G2, G3) independently of the interpolation processes of the other generators (G1, G2, G3) and outputting this control data (X1P, Z1P, C1P, B1P; X2P, Z2P; X3P, Z3P, C3P, B3P) for a plurality of axes;
d) forming resulting control data (XD, ZD, CD, BD) for respectively one axis (X, Z, C, B) through combining the control data (X1P, Z1P, C1P, B1P; X2P, Z2P; X3P, Z3P, C3P, B3P) of these axes (X, Z, C, B) present at the exit of the generators (G1, G2, G3).

6. Method according to claim 5, **characterised in that** the interpolation cycles of individual generators (G1, G2, G3) are set independently of one another.

## Revendications

1. Système de commande numérique pour la fabrication de pièces (1) non rondes comprenant
a) une unité d'entrée (E) pour l'entrée de premières données (X1, Z1, C1, B1) pour la définition de déplacements de positionnement suivant plusieurs axes (X, Z, C, B) entre la pièce (1) et l'outil (3), qui doivent être exécutés avant le processus d'usinage à proprement parler, ainsi que de deuxièmes données (X2. Z2) pour la définition du mouvement d'avance de l'outil (3) à des fins d'enlèvement de copeaux et de troisièmes données (X3, Z3, C3, B3) pour la définition du contour de consigne (1a) non rond de la pièce (1) selon plusieurs axes (X, Z, C, B) ;
b) une unité de coordination (K) pour transmettre les premières données (X1, Z1, C1, B1) à un premier générateur (G1), transmettre les deuxièmes données (X2, Z2) à un deuxième générateur (G2) et transmettre les troisièmes données (X3, Z3, C3, B3) à un troisième générateur (G3), chacun des générateurs (G1, G2, G3) comprenant une unité d'interpolation ;
c) un module additionneur (TX, TZ, TC, TB) pour chaque axe (X, Z, C, B) pour former des données de commande résultantes (XD, ZD, CD, BD) pour un moyen d'entraînement (AX, AZ, AC, AB) d'un axe (X, Z, C, B,) par combinaison des données de commande (X1P, Z1P, C1P, B1P ; X2P, Z2P ; X3P, Z3P, C3P, B3P) de ces axes (X, Z, C, B) disponibles.

2. Système de commande numérique selon la revendication 1, **caractérisé en ce qu'**à au moins un des générateurs (G1, G2, G3) est associé un moyen (A1, A2, A3) pour agir sur les données de commande (X1P, Z1P, C1P, B1P ; X2P, Z2P ; X3P, Z3P, C3P, B3P) à la sortie d'un générateur (G1, G2, G3) sans influer sur les données de commande (X1P, Z1P, C1P, B1P ; X2P, Z2P ; X3P, Z3P, C3P, B3P) d'un autre générateur (G1, G2, G3).

3. Système de commande numérique selon la revendication 2, **caractérisé en ce qu'**au deuxième générateur (G2) est associé un moyen (A2) à l'aide duquel on agit sur la vitesse du déplacement d'avance (X2P, Z2P) ou la longueur du pas d'avance.

4. Système de commande numérique selon la revendication 2, **caractérisé en ce qu'**au troisième générateur (G3) est associé un moyen (A3) à l'aide duquel on agit sur la vitesse de la trajectoire le long du contour de consigne (1a).

5. Procédé d'utilisation d'un système de commande numérique pour la fabrication de pièces (1) non rondes, comprenant les étapes suivantes :
a) entrée de première données (X1, Z1, C1, B1) pour la définition de déplacements de positionnement suivant plusieurs axes (X, Z, C, B) entre la pièce (1) et l'outil (3) avant le processus d'usinage à proprement parler, ainsi que de deuxièmes données (X2. Z2) pour la définition du mouvement d'avance de l'outil (3) à des fins d'enlèvement de copeaux et de troisièmes données (X3, Z3, C3, B3) pour la définition du contour de consigne (1a) non rond de la pièce (1);
b) transmission des premières données (X1, Z1, C1, B1) à un premier générateur (G1), transmission des deuxièmes données (X2, Z2) à un deuxième générateur (G2) et transmission des troisièmes données (X3, Z3, C3, B3) à un troisième générateur (G3) ;
c) calcul indépendant de données de commande (X1P, Z1P, C1P, B1P ; X2P, Z2P ; X3P, Z3P, C3P, B3P) dans les générateurs (G1, G2, G3) en appliquant dans chacun des générateurs (G1, G2, G3) un procédé d'interpolation indépendamment des autres générateurs (G1, G2, G3) et édition desdites données de commande (X1P, Z1P, C1P, B1P ; X2P, Z2P ; X3P, Z3P, C3P, B3P) pour plusieurs axes (X, Z, C, B) ;
d) formation de données de commande résultantes (XD, ZD, CD, BD) pour un axe (X, Z, C, B) chaque fois, par combinaison des données de commande (X1P, Z1P, C1P, B1P ; X2P, Z2P ; X3P, Z3P, C3P, B3P) de ces axes (X, Z, C, B) disponibles à la sortie des générateurs (G1, G2, G3).

6. Procédé selon la revendication selon la revendication 5, **caractérisé en ce qu'**on règle le pas d'interpolation de chacun des générateurs (G1, G2, G3) indépendamment des autres générateurs.
